# EUROPÄISCHE PATENTSCHRIFT

(11) **EP 1 511 972 B1**
(45) Veröffentlichungstag und Bekanntmachung des Hinweises auf die Patenterteilung: **12.09.2012**
(21) Anmeldenummer: 03724843.2
(22) Anmeldetag: 25.03.2003
(51) Int. Cl.: G01C 21/36, G06F 3/033, G06F 3/048

(54) **VERFAHREN ZUR EINGABE VON ORTSNAMEN**
METHOD FOR INPUTTING LOCAL NAMES
PROCEDE D'ENTREE DE NOMS DE LOCALITES

(30) Priorität: 24.05.2002 DE 10223121
(43) Veröffentlichungstag der Anmeldung: 09.03.2005
(73) Patentinhaber: ROBERT BOSCH GMBH, 70442 Stuttgart (DE)
(72) Erfinder: LISTLE, Holger, 31195 Lamspringe (DE); LUEER, Stefan, 31137 Hildesheim (DE); BRENNER, Claus, 30655 Hannover (DE); FAENGER, Jens, 06406 Bernburg (DE)
(86) Internationale Anmeldenummer: PCT/DE2003/000971
(87) Internationale Veröffentlichungsnummer: WO 2003/100351

(56) Entgegenhaltungen:
- DE-A- 4 033 829
- DE-A- 10 012 441
- DE-A- 19 840 120

## Beschreibung

### Stand der Technik

Die Erfindung geht aus von einem Verfahren zur Eingabe von Ortsnamen nach der Gattung des Hauptanspruchs. Es sind bereits Eingabeverfahren für Ortsnamen bekannt, insbesondere zur Fahrzieleingabe für Navigationsvorrichtungen in Kraftfahrzeugen. Die Ortsnamen werden z.B. über eine Tastatur oder eine Spracherkennung in die Navigationsvorrichtung eingegeben bzw. aus einer in einer Anzeige dargestellten Liste ausgewählt. Mitunter treten Ortsnamen auf, denen nicht eindeutig ein Ort zugeordnet werden kann, da mehrere der gespeicherten Orte den gleichen Namen tragen. An eine erste Eingabe durch den Benutzer muss sich in diesem Fall eine Mehrdeutigkeitsauflösung anschließen. Es ist hierzu bekannt, z.B. auf einer zusätzlichen Bildschirmseite weitere Textinformationen zu den einzelnen Orten auszugeben und z.B. den zugehörigen Landkreis des Ortes in Textform anzuzeigen Siche z.B. die DE 10012441. Ein Benutzer, der nur die ungefähre geographische Lage des Ortes, nicht jedoch z.B. die Zuordnung zu einem Landkreis kennt, wird anhand dieser rein textbasierten Auswahl möglicherweise den falschen Ort auswählen, so dass entsprechend eine nachfolgende Routenberechnung nicht zutreffend erfolgen kann. Ebenso schwierig wie eine Zuordnung einer Stadt zu einem Landkreis ist für einen Ortsunkundigen im allgemeinen die Zuordnung einer Straße zu einer geographischen Position anhand der Bezeichnung eines Stadtteils. Insbesondere in dem Fall, dass Straßen gleichen Namens in der gleichen Stadt getrennt voneinander in verschiedenen Stadtteilen liegen oder dass Straßen einer Stadt durch mehrere Stadtteile verlaufen, hat insbesondere ein nicht ortskundiger Benutzer Schwierigkeiten, die für ihn richtige Auswahl zu treffen.

### Vorteile der Erfindung

Das erfindungsgemäße Verfahren mit den Merkmalen der nebengeordneten Ansprüche und die erfindungsgemäße Navigationsvorrichtung haben demgegenüber den Vorteil, dass für den Fall, dass einem eingegebenen Ortsnamen nicht eindeutig ein Ort zugeordnet werden kann, eine Mehrdeutigkeitsauflösung dadurch erfolgt, dass einem Betrachter bildliche Informationen angezeigt werden, die ihm eine Auswahl des tatsächlich gewünschten Fahrziels erleichtert. Hierzu werden sich jeweils unterscheidende Grafiken angezeigt, die jeweils den zugeordneten Ort charakterisieren und durch die ein Benutzer eine einfache Unterscheidung zwischen den verschiedenen Orten gleichen Namens treffen kann. Durch die leichte Erfassbarkeit einer Grafik, kann hierdurch die Auswahl zwischen gleichnamigen Orten sowohl beschleunigt als auch sicherer gestaltet werden, um eine Fahrzieleingabe durchzuführen.

Durch die in den Ablängigen Ansprüchen aufgeführten Maßnahmen sind vorteilhafte Weiterbildungen und Verbesserungen des im Hauptanspruch angegebenen Verfahrens möglich.

Besonders vorteilhaft ist ferner, unterschiedliche Grafiken in Form von Symbolen, Fotos und/oder fotorealistischen Darstellungen zur Kennzeichnung der unterschiedlichen Orte jeweils einem Ort zuzuordnen.

Insbesondere ist es vorteilhaft, dass eine Anzeige zur Auswahl dadurch erfolgt, dass die Positionen der Orte in einer Kartendarstellung zur Auswahl durch den Benutzer angezeigt werden. Der Benutzer wird somit zumindest über die ungefähre geographische Lage der verschiedenen Orte mit gleichem Namen informiert. Die graphische Darstellung in der Karte ist zudem leichter erfassbar als eine rein textbasierte Ausgabe. Der Benutzer kann nun eine Auswahl zwischen den verschiedenen dargestellten Orten mit gleichem Namen treffen und sich dabei an der geographischen Lage des Ortes orientieren.

Besonders vorteilhaft ist, weitere Informationen, insbesondere nach Aufruf durch einen Benutzer, in der Kartendarstellung zu der Position des jeweiligen Ortes anzuzeigen oder in die Kartendarstellung einzublenden, z.B. den Landkreis, die Postleitzahl oder das Bundesland des Ortes. Sollte sich ein Benutzer anhand der geographischen Position noch nicht sicher sein, kann er seine Auswahl, sofern erforderlich, auf diese zusätzlichen Informationen stützen, um zu gewährleisten, dass er tatsächlich den von ihm gewünschten Ort auswählt.

Ferner ist vorteilhaft, den Maßstab der Kartendarstellung so zu wählen, dass die mindestens zwei Orte mit gleichem Ortsnamen in der Kartendarstellung gleichzeitig in einer Karte zusammen angezeigt werden. Hierdurch kann der Benutzer, ohne dass er eine andere Bildschirmseite oder Karte auswählen muss, die geographische Lage der mindestens zwei Orte vergleichen und seine Entscheidung zwischen den verschiedenen Orten treffen. Hierbei ist insbesondere vorteilhaft, den Maßstab automatisch so zu wählen, dass der kleinste verfügbare Maßstab, also eine größtmögliche Kartendarstellung, gewählt wird, so dass die Anzeige möglichst optimal ausgenutzt wird und der Benutzer damit möglichst detaillierte Informationen über die Lage der verschiedenen Orte erhält.

Ferner ist es gemäß einer weiteren Ausführungsart vorteilhaft, für jeden Ortsnamen eine eigene, zugeordnete Kartendarstellung vorzusehen, in dem der Ort markiert ist. Somit wird eine Listenauswahl zwischen den einzelnen Ortsnamen ermöglicht. Ein besonderer Texteintrag, der auf den auszuwählenden Ortsnamen in der Karte hinweist, ist damit nicht erforderlich. Die Karte ist dabei vorzugsweise als eine Übersichtskarte ausgeführt, die eine schnelle Entscheidung durch den Benutzer ermöglicht.

Ferner ist vorteilhaft, nach der Auswahl eines Ortes eine weitere Teilauswahl zwischen einzelnen, diesem Ort wiederum zugeordneten Orten anzubieten. Hierbei können Stadtteile des Ortes, Straßen oder auch nach Funktionen geordnete Einrichtungen, z.B. Restaurants, Hotels oder Tankstellen, ausgewählt werden.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Navigationsvorrichtung zur Durchführung des erfindungsgemäßen Verfahrens,
Figur 2 ein Ausführungsbeispiel für einen erfindungsgemäßen Verfahrensablauf.
Die Figuren 3 und 4 zeigen weitere Ausführungsbeispiele für eine Bildschirmdarstellung einer erfindungsgemäßen Navigationsvorrichtung.

### Beschreibung des Ausführungsbeispiels

Das erfindungsgemäße Verfahren zur Eingabe von Ortsnamen kann für beliebige insbesondere rechnergestützte Anwendungen verwendet werden. Hierbei sind z.B. ein Verfahren zur Auswahl eines Fahrziels zum Buchen eines Fahrscheins oder eine Auswahl eines Ortes zur Ermittlung einer Telefonnummer möglich. Insbesondere ist das erfindungsgemäße Verfahren vorteilhaft für zur Zielauswahl für ein Navigationsverfahren zur Routenberechnung in einem Straßennetz anwendbar. Hierbei ist insbesondere, die Durchführung des Verfahrens in einer Navigationsvorrichtung in einem Kraftfahrzeug vorteilhaft, da in dem Fahrzeug eine Eingabe schnell und übersichtlich erfolgen soll, während nur begrenzte Eingabe- und Anzeigemittel zur Verfügung stehen. Ferner kann insbesondere für Routenplanungsprogramme nicht nur die Eingabe eines Fahrziels, sondern auch die Eingabe eines Startpunktes auf die erfindungsgemäße Weise vorgenommen werden. Das erfindungsgemäße Verfahren ist im Folgenden am Beispiel einer in ein Kraftfahrzeug integrierten Navigationsvorrichtung erläutert. Unter einem Ortsnamen ist zunächst die Bezeichnung einer Stadt, einer Gemeinde oder eines Dorfes zu verstehen. Jedoch kann unter einem Ortsnamen auch eine allgemeine geografische oder verwaltungsmäßige Bezeichnung verstanden werden. So kann ein Ortsname auch auf Orts- oder Stadtteile, auf Straßen, auf besondere Geländeformen, wie Berge oder Pässe, auf Sehenswürdigkeiten und/oder besondere Einrichtungen, wie z.B. Firmensitze oder Ämter, bezogen sein.

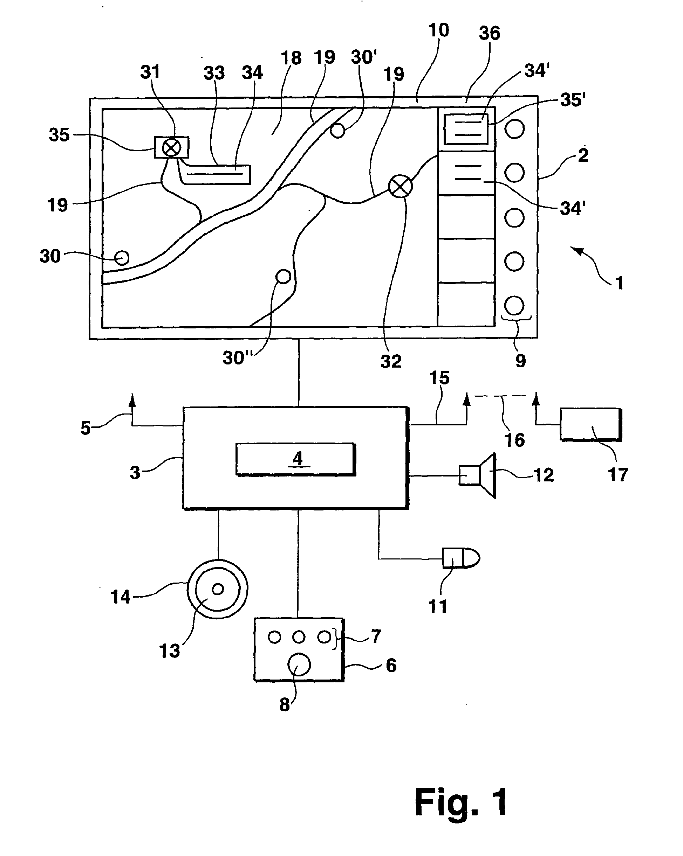

In der Figur 1 ist eine Navigationsvorrichtung 1 mit einer Anzeigeeinheit 2 und einer Steuerungseinheit 3 dargestellt, an die die Anzeigeeinheit 2 angeschlossen ist. Die Steuerungseinheit 3 verfügt ferner über eine Recheneinheit 4, die der Steuerung der Anzeigeeinheit 2, einer Routenberechnung und der Durchführung einer Benutzereingabe dient. Die Steuerungseinheit 3 verfügt ferner über eine Ortungsvorrichtung 5, die über eine entsprechende Antenne einen Funkkontakt zu Satelliten eines Satellitenortungssystems herstellt und die Position des Fahrzeugs bestimmt, in dem die Navigationsvorrichtung 1 angeordnet ist. Die Steuerungseinheit 3 ist ferner mit einer Bedieneinheit 6 verbunden, an der Drucktasten 7 und/oder ein Drehregler 8 angeordnet sind, und über die die Steuerungseinheit 3 von einem Benutzer bedient wird. Ferner können auch Drucktasten 9 neben einer Anzeigefläche 10 an der Anzeigeeinheit 2 angeordnet sein. In einem weiteren Ausführungsbeispiel kann auch die Anzeigefläche 10 als eine berührungsempfindliche Anzeige ausgeführt sein, in der in der Anzeige dargestellte Funktionen durch eine Berührung der Anzeigefläche entsprechenden ausgewählt werden können. Es ist auch möglich, andere geeignete Bedienelemente vorzusehen. Ferner ist die Steuerungseinheit 3 in einer bevorzugten Ausführungsform mit einem Mikrophon 11 verbunden, das zu einer Sprachsteuerung der Steuerungseinheit 3 dient. Über einen Lautsprecher 12 können akustische Informationen an einen Fahrer ausgegeben werden, insbesondere Fahrhinweise, z.B. Hinweise auf ein vorzunehmendes Abbiegen. Auf einem Datenträger 13, der in ein zugehöriges Datenträgerlaufwerk 14 eingelegt ist, ist eine digitale Karte mit einem Straßennetz gespeichert. Ferner sind Ortsnamen und die geographischen Positionen der jeweiligen den Ortsnamen zugeordneten Orte auf dem Datenträger 13 abgelegt. Unter Ortsnamen sind hierbei z.B. Städtenamen, Bezeichnungen von Stadtteilen oder auch Straßennamen zu verstehen.

Die Steuerungseinheit 3 kann über das Datenträgerlaufwerk 14 auf den Datenträger 13 zugreifen und erforderliche Informationen zur Weiterverarbeitung durch die Recheneinheit 4 an die Steuerungseinheit 3 übertragen. Ferner ist die Steuerungseinheit 3 über eine Funkschnittstelle 15 mittels einer Funkverbindung 16, insbesondere einer Mobilfunkverbindung, mit einer Datenzentrale 17 verbindbar. In der Datenzentrale 17 können ebenfalls Kartendäten und/oder Ortsdaten sowie darüber hinausgehende Informationen abgelegt sein, die über die Funkverbindung 16 an die Steuerungseinheit 3 übertragbar sind. In einem weiteren Ausführungsbeispiel kann eine Routenberechnung auch in der Datenzentrale 17 erfolgen.

Über die Bedieneinheit 6, die Drucktaste 9, die Anzeigefläche 10 und/oder das Mikrophon 11 wird ein Fahrziel in die Steuerungseinheit 3 eingegeben. Die Recheneinheit 4 berechnet unter Rückgriff auf die gespeicherte digitale Karte, die z.B. auf dem Datenträger 13 abgelegt ist, eine Fahrtroute von der über die Ortungseinheit 5 bestimmten aktuellen Position des Fahrzeugs zu dem eingegebenen Fahrziel.

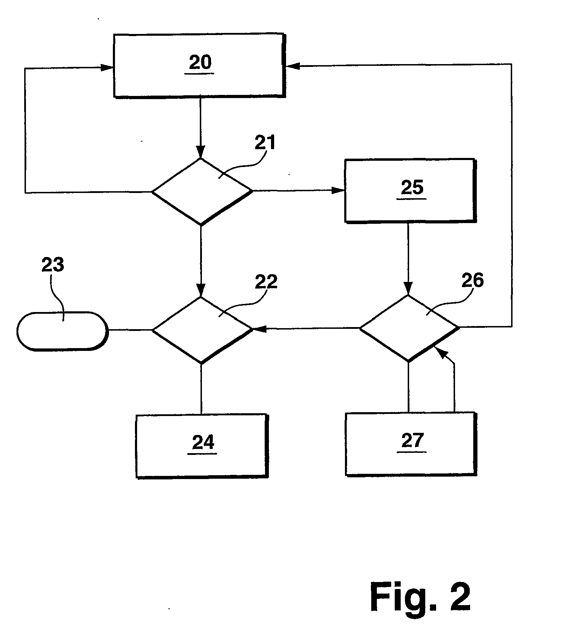

Ein erfindungsgemäßes Verfahren zur Fahrzieleingabe ist in der Figur 2 dargestellt. Nach einem Einschalten der Navigationsvorrichtung 1 wird ein Fahrer über eine geeignete Ausgabe der Navigationsvorrichtung 1 dazu aufgefordert, ein Fahrziel einzugeben. Die Aufforderung kann über die Anzeigefläche 10 und/oder - insbesondere während der Fahrt- über einen akustischen Hinweis über den Lautsprecher 12 erfolgen. Im Anschluss wird in einem Ortsnameneingabeschritt 20 ein Fahrziel in die Navigationsvorrichtung 1 eingegeben. Dies kann z.B. über die Spracheingabe mittels des Mikrophons 11 oder über eine Auswahl einer Folge von Buchstaben über die Drucktasten 7 oder in Verbindung mit einer entsprechenden Buchstabenanzeige und Buchstabenauswahl in der Anzeigefläche 10 über den Drehregler 8 erfolgen. Wird der Ortsnameneingabeschritt 20 beendet, so wird zu einem ersten Prüfschritt 21 verzweigt, in dem überprüft wird, ob die Ortsnamenzuordnung eindeutig ist. Wird festgestellt, dass auf dem als eine Speichereinheit dienenden Datenträger 13 kein zu der Eingabe passender Ortsname existiert, so wird der Benutzer darauf hingewiesen und es wird zu dem Ortsnameneingabeschritt 20 zurückverzweigt. Wird festgestellt, dass genau ein zugeordneter Ortsname existiert, so wird zu einem zweiten Prüfschritt 22 weiter verzweigt, in dem überprüft wird, ob es zu dem gewünschten Ort Teilorte gibt, die von einem Benutzer speziell auszuwählen sind, z.B. einzelne Stadtteile, Sehenswürdigkeiten, Restaurants, Hotels oder bestimmte Straßen. Ist der Ort durch die bisherige Ortsnameneingabe eindeutig bestimmt, so wird zu einem Festlegungsschritt 23 verzweigt, in dem der eingegebene Ortsname als Fahrziel festgelegt wird und die Route von der aktuellen Fahrzeugposition zu dem nunmehr festgelegten Fahrziel berechnet wird. Wird festgestellt, dass der Ort noch nicht eindeutig bestimmt ist, wird zu einer Unterauswahl 24 verzweigt, bei der der Fahrer zur Auswahl eines Teilortes aufgefordert wird. Die Auswahl eines Teilortes kann entsprechend dem Verfahren der Auswahl des Hauptortes erfolgen. Ferner kann zur Auswahl des Teilortes dem Benutzer auch unmittelbar eine Listenauswahl angeboten werden. Wird in dem ersten Prüfschritt 21 festgestellt, dass die Zuordnung des Namens nicht eindeutig ist, so wird zu einem ersten Anzeigeschritt 25 verzweigt. In diesem Fall wird z.B. eine Anzeige in der Anzeigefläche 10 dargestellt, wie sie in der Figur 1 gezeigt ist.

In der Anzeigefläche 10 gemäß der Figur 1 ist eine Kartendarstellung 18 dargestellt, bei der der Verlauf verschiedener Straßen 19 graphisch in die Kartendarstellung eingetragen ist. Ferner sind verschiedene Orte 30, 30', 30", die an den Straßen 19 liegen, in die Karte eingetragen. Demgegenüber ist ein erster hervorgehobener Ort 31 und ein zweiter hervorgehobener Ort 32 durch eine entsprechende Markierung in der Kartendarstellung 18 an der jeweiligen Position des Ortes hervorgehoben dargestellt. Die Markierungen, die z.B. als Sterne oder als Kreise ausgeführt sind, unterscheiden sich von den sonst für die Darstellung von Orten in der Anzeigefläche 10 verwendeten Zeichen oder Symbolen. Die hervorgehoben dargestellten Orte 31, 32 bezeichnen die Positionen von Orten mit einem gleichen Namen, der zuvor von dem Benutzer eingegeben wurde. Beide Orte 31, 32 werden ohne eine weitere Eingabe durch den Benutzer in der Kartendarstellung 18 angezeigt. Hierbei wird in dem ersten Anzeigeschritt 25 in Abhängigkeit von dem Abstand der zwei Orte ein entsprechender Maßstab der Kartendarstellung 18 ausgewählt. Der Maßstab wird dabei so ausgewählt, dass die Anzeigefläche 10 möglichst optimal ausgenutzt wird, so dass eine möglichst hohe Auflösung der Kartendarstellung 18 erreicht wird und hierdurch beide Orte zugleich dargestellt werden können. In einer bevorzugten Ausführungsform wird an dem ersten hervorgehobenen Ort 31 ein Zusatztext 34, der in der Figur 1 schematisch dargestellt ist, zu der Position des ersten hervorgehobenen Ortes 31 in einem Rahmen 33 angezeigt. Der Zusatztext 34 informiert z.B. über die Postleitzahl oder den Landkreis des ersten hervorgehobenen Ortes 31. Der Zusatztext ist ebenfalls auf dem Datenträger 13 den einzelnen Orten zugeordnet gespeichert. Die Markierung des ersten hervorgehobenen Ortes 31 ist zudem von einem Auswahlrahmen 35 umgeben. Durch eine entsprechende Auswahl vorzugsweise mittels einer der Drucktasten 7 kann die bereits voreingestellte und mit dem Auswahlrahmen 35 angezeigte Auswahl bestätigt und der Ortsname des ersten hervorgehobenen Ortes 31 als ein neues Fahrziel eingegeben werden. Vorzugsweise über den Drehregler 8 ist ein Wechsel des Auswahlrahmens 35 zu dem zweiten hervorgehobenen Ort 32 möglich. In einem in der Figur 1 nicht dargestellten Ausführungsbeispiel kann eine Auswahlmarkierung, ein sogenannter Cursor, auch frei mittels Eingabeelementen zwischen verschiedenen hervorgehobenen Orten bewegt werden. In einem weiteren Ausführungsbeispiel können der Ortsname und eine jeweilige Zusatzinformation in weiteren Fenstern 36 zusammen mit einer jeweils zugeordneten Auswahlmarke 35' angezeigt werden. Die Zusatztexte 34, 34' können ebenfalls in den Fenstern 36 angezeigt werden. In einer bevorzugten Ausführungsform sind die Fenster 36 einzelnen Drucktasten 9 an der Anzeigeeinheit 2 zugeordnet, so dass über eine Betätigung der jeweils zugeordneten Drucktaste 9 zunächst eine Auswahl und bei einer erneuten Betätigung auch eine Eingabe des ausgewählten Ortes als ein Fahrziel erfolgen kann. In einer bevorzugten Ausführungsform werden in der Kartendarstellung 18 die Zusatztexte 34 nur dann angezeigt, wenn der jeweilige Ort zur Fahrzieleingabe ausgewählt werden soll.

Im allgemeinen wird die Eingabe eines Fahrziels mit der Eingabe eines Städtenamens beginnen. Beispielhaft wird der Ortsname "München" angeführt. Wird der Ortsname "München" eingegeben, so werden in der Karte die Städte "München" in den Kreisen Amberg-Sulzbach, Elbe-Elster, München-Stadt, München-Land, Passau-Land und Weimarer Land angezeigt. Bei der Auswahl einer der Markierungen in der Karte wird der jeweilige Kreisname mit angegeben. Ferner kann das erfindungsgemäße Eingabeverfahren auch z.B. dann verwendet werden, wenn in einer Stadt mehrere Straßen einen gleichen Namen oder einen ähnlichen Namen haben, z.B. XY-Straße und XY-Platz.

In einer weiteren Ausführungsform kann das erfindungsgemäße Eingabeverfahren auch dann angewendet werden, wenn nicht ein vollständiger Ortsname, sondern nur ein Ortsteilname eingegeben wird und auf Basis der bisherigen Eingabe keine eindeutige Zuordnung des teilweise eingegebenen Ortsnamens zu einem gespeicherten Ortsnamen erfolgen kann. In einer bevorzugten Ausführung erfolgt dabei eine Anzeige der Position in der Karte nur dann, wenn die Anzahl von darzustellenden Orten eine vorgegebene Anzahl nicht übersteigt, z.B. wenn sie kleiner als acht ist. Hierdurch wird eine zu unübersichtliche Anzeigendarstellung vermieden.

An den ersten Anzeigeschritt 25 schließt ein dritter Prüfschritt 26 an, in dem abgefragt wird, welcher der ausgewählten Orte als Fahrziel eingegeben werden soll. In einer bevorzugten Ausführungsform kann zunächst ein Ort ausgewählt werden, Diese Auswahl kann noch geändert werden. Anschließend wird ein ausgewählter Ort bestätigt. Ist die Betätigung erfolgt, so wird zu dem zweiten Prüfschritt 22 weiterverzweigt. Werden zusätzliche Informationen angefordert, z.B. über eine Betätigung der Bedieneinheit 6, so wird in einem zweiten Anzeigeschritt 27 mindestens zu dem ausgewählten Ort die gewünschte Zusatzinformation angezeigt. Ferner kann über die Bedieneinheit 6 auch angegeben werden, dass keiner der angezeigten Orte von dem Benutzer gewünscht wird. In diesem Fall wird zu dem Ortsnameneingabeschritt 20 zurück verzweigt, in dem der Benutzer die Eingabe des Ortsnamens erneut durchführt.

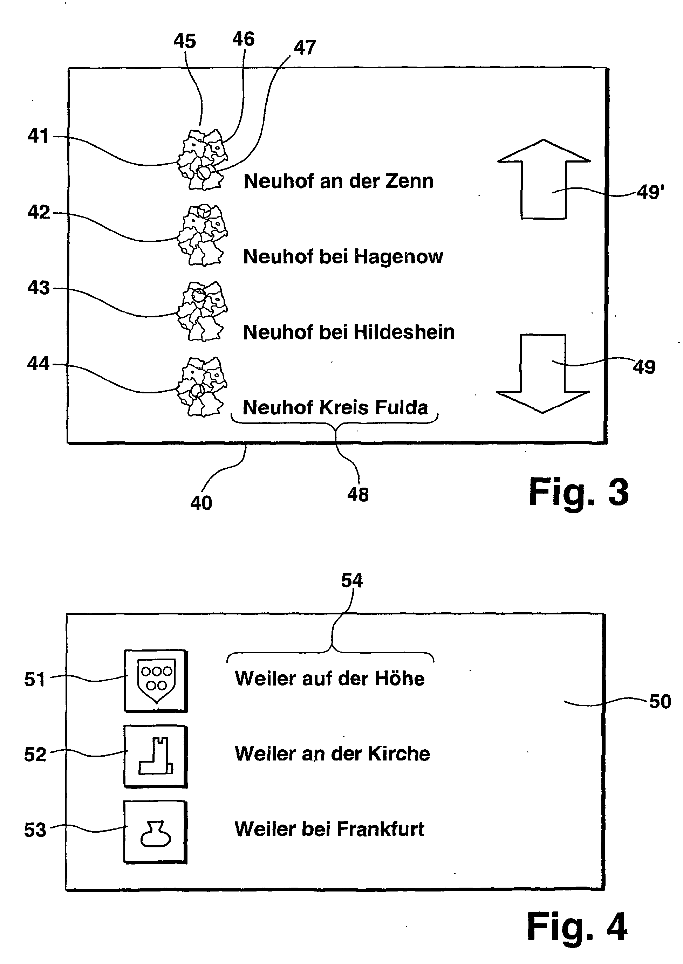

In der Figur 3 ist ein weiteres Ausführungsbeispiel für eine Anzeigendarstellung in der Anzeigefläche 10 gezeigt. Bei diesem Ausführungsbeispiel gibt der Fahrer als Fahrziel in die Navigationsvorrichtung den Ortsnamen "Neuhof" ein. Als Ergebnis erhält er eine Anzeigendarstellung mit allen Orten gleichen Namens. In der Anzeigendarstellung 40 ist eine Auswahl des Ortsnamens "Neuhof" dargestellt. Hierbei sind vier verschiedene Orte mit dem Namen "Neuhof" zur Auswahl angeboten. Jedem Ort ist dabei eine Zeile 41, 42, 43 und 44 in der Anzeigendarstellung 40 zugewiesen. In einer ersten Spalte 45 sind dabei Kartendarstellungen 46 von Deutschland eingetragen. In dem hier gewählten Ausführungsbeispiel sind zur besseren Unterscheidbarkeit der einzelnen Orte Ländergrenzen der Bundesländer in die Kartendarstellung Deutschlands eingetragen. Anstelle der hier gezeigten Umrisskarte der Bundesrepublik Deutschland kann auch der Umriss eines Bezirkes eines Bundeslandes oder einer anderen Verwaltungsgliederung gezeigt werden. Enthält die Liste z.B. die Namen von Stadtteilen oder von Straßen in verschiedenen Stadtteilen, so zeigen die jeweils zu den Namen dargestellten Graphiken beispielsweise die Umrisse der Stadt bzw. des jeweiligen Stadtteils. Entsprechend können auch in einer Straßengraphik Hausnummern entsprechend gekennzeichnet werden.

Ein Kreis 47 markiert ein Gebiet, in dem der jeweilige, zugeordnete Ort liegt, wobei die Ortsnamen jeweils in einer zweiten Spalte 48 neben den jeweils zugehörigen Kartendarstellungen 41, 42, 43, 44 eingetragen sind. Der Ort liegt dabei vorzugsweise im Zentrum des jeweiligen Kreises. Statt eines Kreises 47 können auch Kreuzmarkierungen oder ähnliche Eintragungen in der Karte 46 vermerkt sein. Aus Gründen der Übersichtlichkeit der Zeichnung ist jeweils nur eine Karte und ein Kreis mit einem Bezugszeichen versehen. In der Spalte 48 ist der Ortsname jeweils, gemäß einer bevorzugten Ausführungsform mit einer Textergänzung bezüglich seiner regionalen Zugehörigkeit eingetragen: "Neuhof an der Zenn", "Neuhof bei Hagnow", "Neuhof bei Hildesheim" und "Neuhof Kreis Fulda". In einer weiteren, in der Zeichnung nicht dargestellten Ausführungsform kann auch lediglich der Ortsname in der Spalte 48 eingetragen werden, wobei ein Benutzer dann aufgrund der Zuordnung zu den dargestellten Karten die Position des Ortes bestimmt.

Ferner sind in der Anzeigefläche Pfeile 49, 49' zur Auswahl anderer Orte mit dem Namen "Neuhof" oder zur Auswahl weiterer Funktionen der Navigationsvorrichtung dargestellt. Die Festlegung eines Ortes als Fahrziel erfolgt dabei vorzugsweise über eine Auswahl mittels der Bedieneinheit 6, wobei über den Drehregler 8 eine Auswahlmarke auf einen der angegebenen Orte verschoben und der ausgewählte Ort über eine der Drucktasten 7 oder über eine Druckfunktion des Drehreglers 8 bestätigt wird.

Die Kartendarstellungen, die zusammen mit den verschiedenen Fahrzielen in der Anzeigefläche 40 dargestellt werden, können gegebenenfalls recht klein sein, so dass insbesondere nur geringe Lageunterschiede aufgrund der begrenzten Auflösung nicht mehr erkennbar sind. Hierzu ist es vorzugsweise vorgesehen, dass sich ein Benutzer auf Wunsch eine Vergrößerung der jeweiligen Kartendarstellung nach Anforderung über die Bedieneinheit 6 anzeigen lassen kann. Eine solche Anzeige kann z.B. dadurch veranlasst werden, dass die jeweilige Kartendarstellung mit einem Anzeigerahmen oder einer Anzeigemarke in der Anzeigefläche 40 ausgewählt wird. Die vergrößerte Kartendarstellung verdeckt dann zumindest zeitweise und zumindest teilweise die anderen, kleineren Kartendarstellungen.

In einem weiteren, in der Zeichnung nicht dargestellten Ausführungsbeispiel wählt der Fahrer als Ziel die "Hildesheimer Straße" in Hannover. Als Ergebnis erhält er eine Liste mit drei Stadtteilen, durch die diese Straße führt. Ihm sind diese Stadtteile zwar namentlich bekannt, er weiß aber nicht, wo sie sich innerhalb von Hannover befinden. Er weiß allerdings, dass sich sein gewünschtes Ziel südlich der Stadtmitte befinden muss. Anhand der Übersichtskarten, kann er den gewünschten Stadtteil auffinden. In einem anderen Beispiel wird die "Bergstrasse", die in der Stadt Wetzlar an mehreren Stellen auftritt, in einer ersten Ausführungsform an den entsprechenden Stellen im Stadtplan eingezeichnet. In einer zweiten Ausführungsform werden jeweils kleine Darstellungen des Stadtgebiets mit einer jeweiligen Hervorhebung der Stellen des zugehörigen Segments der "Bergstrasse" zur Auswahl in Listenform entsprechend der Darstellung in der Figur 3 zur Auswahl angeboten.

Ergänzend können in einer anderen Ausführungsform stattdessen oder zusätzlich auch andere Graphiken zur Unterscheidung der verschiedenen, gleichnamigen Orte genutzt werden. Eine Möglichkeit hierfür ist z.B., Bilder der Städte- oder Stadtteile, die z.B. markante Merkmale zeigen, neben dem jeweiligen Ortsnamen darzustellen. Auch symbolhafte, abstrakte Darstellungen können hierbei verwendet werden, etwa einen symbolische Darstellung eines Gebäudes, eines Turms, eines Sees, eines Wasserwegs, eines Parks oder eines Brunnens. Ferner können z.B. auch Stadtwappen eingeblendet werden. In der Figur 4 ist hierzu eine Anzeigenfläche 50 gezeigt, in der verschiedene Orte mit dem Namen "Weiler" zur Auswahl angeboten werden. In einer Textspalte 54 ist hierbei zu jedem Ort "Weiler" in einer bevorzugten Ausführungsform noch ein Ergänzungstext angegeben. Ferner sind entsprechende Grafiken 51, 52, 53 zu jedem Ort angegeben. Die Grafiken können als grafische, symbolhafte Darstellungen oder als photografische oder zumindest photorealistische Darstellungen in der Anzeigefläche 50 angezeigt werden.

In der ersten Zeile ist zu dem ersten Ort mit dem Stadtwappen 51 des Ortes Weiler auf der Höhe ein Stadtwappen angegeben, dass zumindest einem kundigen Benutzer die Identifikation des Ortes ermöglicht. Zu dem zweiten Ort ist in der zweiten Zeile eine Bilddarstellung 52 einer Sehenswürdigkeit, hier einer Ruine, dargestellt, die die Wiedererkennbarkeit gewährleisten soll. In der dritten Zeile ist ein Symbol 53, hier für regionale Handwerkskunst, hier in Form eines Tonkrugs, dargestellt, der auf ein entsprechendes lokales, bekanntes Produkt hinweisen soll. Anhand der angezeigten Symbole kann ein Benutzer nun eine Auswahl zwischen den verschiedenen gleichnamigen Orten mit dem Namen "Weiler" treffen.

## Patentansprüche

1. Verfahren zur Eingabe von Ortsnamen in eine Vorrichtung zur Verarbeitung der Ortsnamen, insbesondere in eine Navigationsvorrichtung in einem Fahrzeug, wobei ein Ortsname eingegeben wird, wobei der eingegebene Ortsname mit in einem Speicher abgelegten Ortsnamen verglichen wird, **dadurch gekennzeichnet, dass** für den Fall, dass der eingegebene Ortsname mindestens zwei verschiedenen Orten zugeordnet wird, mindestens eine die Orte kennzeichnende Grafik zur Auswahl einer der Orte angezeigt wird.

2. Verfahren nach Anspruch 1, **dadurch gekennzeichnet, dass** für jeden Ort gleichen Namens eine den Ort kennzeichnende Grafik dargestellt wird.

3. Verfahren nach einem der vorherigen Ansprüche, **dadurch gekennzeichnet, dass** die Grafiken Abbildungen von Sehenswürdigkeiten, Verwaltungszeichen, insbesondere Wappen, und/oder Kartendarstellungen sind.

4. Verfahren nach einem der vorherigen Ansprüche, **dadurch gekennzeichnet, dass** die Positionen der mindestens zwei Orte in wenigstens einer Kartendarstellung zur Auswahl angezeigt werden.

5. Verfahren nach einem der vorherigen Ansprüche, **dadurch gekennzeichnet, dass** der Maßstab der Kartendarstellung derart gewählt wird, dass die mindestens zwei Orte in der Kartendarstellung gleichzeitig angezeigt werden.

6. Verfahren nach Anspruch 5, **dadurch gekennzeichnet, dass** der kleinste verfügbare Maßstab gewählt wird, der noch eine gleichzeitige Darstellung der mindestens zwei Orte in der Anzeigefläche (10) ermöglicht.

7. Verfahren nach Anspruch 4, **dadurch gekennzeichnet, dass** für jeden der mindestens zwei Orte eine dem Ortsnamen zugeordnete Kartendarstellung angezeigt wird und dass die Position des jeweiligen Ortes in der ihm zugeordneten Kartendarstellung angezeigt wird.

8. Verfahren nach Anspruch 7, **dadurch gekennzeichnet, dass** zu jeder Kartendarstellung der Ortsname mit einer zugehörigen Erläuterung in der Anzeigefläche (40) dargestellt wird.

9. Verfahren nach einem der Ansprüche 4-8, **dadurch gekennzeichnet, dass** zu einem der mindestens zwei Orte eine weitere Information in der Umgebung der Position des Ortes in die Kartendarstellung eingeblendet wird.

10. Verfahren nach Anspruch 9, **dadurch gekennzeichnet, dass** die Einblendung der weiteren Information durch einen Benutzer aufgerufen wird.

11. Verfahren nach einem der vorherigen Ansprüche **dadurch gekennzeichnet, dass** nach der Auswahl eines der Orte zu diesem Ort gehörende Teilorte zur Auswahl angezeigt werden.

12. Navigationsvorrichtung insbesondere in einem Fahrzeug mit einer Anzeigeeinheit (2), mit einer Bedieneinheit (6, 9, 10), mit einer Recheneinheit (4) und mit einer Speichereinheit (13, 14, 17), wobei über die Bedieneinheit (6) ein Ortsname in die Navigationsvorrichtung eingebbar ist, wobei der Ortsname von der Recheneinheit (4) mit in der Speichereinheit (13, 14, 17) abgelegten Ortsnamen vergleichbar ist, **dadurch gekennzeichnet, dass** mindestens zwei Orte mit dem gleichen Namen in der Speichereinheit (13) gespeichert sind, dass in der Speichereinheit (13, 14, 17) Grafiken zur Identifizierung dieser Orte gespeichert sind und in der Anzeigeeinheit (2) zur Auswahl über die Bedieneinheit (6, 9, 10) anzeigbar sind.

13. Navigationsvorrichtung nach Anspruch 12, **dadurch gekennzeichnet, dass** die Grafiken den Orten in der Speichereinheit jeweils zugeordnet sind.

14. Navigationsvorrichtung nach einem der Ansprüche 12-13, **dadurch gekennzeichnet, dass** die Grafiken Kartendarstellungen zur Anzeige der Position der den Ortsnamen zugehörigen Orte sind.

## Claims

1. Method for inputting place names into an apparatus for processing the place names, particularly into a navigation apparatus in a vehicle, wherein a place name is input, wherein the input place name is compared with place names stored in a memory, **characterized in that** if the input place name is allocated to at least two different places then at least one graphic denoting the places is displayed for the purpose of selection of one of the places.

2. Method according to Claim 1, **characterized in that** for each place of the same name a graphic denoting the place is presented.

3. Method according to either of the preceding claims, **characterized in that** the graphics are depictions of attractions, administrative symbols, particularly emblems, and/or map presentations.

4. Method according to one of the preceding claims, **characterized in that** the positions of the at least two places are displayed in at least one map presentation for the purpose of selection.

5. Method according to one of the preceding claims, **characterized in that** the scale of the map presentation is chosen such that the at least two places are displayed in the map presentation at the same time.

6. Method according to Claim 5, **characterized in that** the smallest available scale which still allows the at least two places to be presented in the display panel (10) at the same time is chosen.

7. Method according to Claim 4, **characterized in that** for each of the at least two places a map presentation associated with the place name is displayed and **in that** the position of the respective place is displayed in the map presentation which is associated with said place.

8. Method according to Claim 7, **characterized in that** for each map presentation the place name is presented in the display panel (40) with an associated explanation.

9. Method according to one of Claims 4-8, **characterized in that** for one of the at least two places a further piece of information is overlaid in the map presentation in the surroundings of the position of the place.

10. Method according to Claim 9, **characterized in that** the overlay of the further information is called by a user.

11. Method according to one of the preceding claims, **characterized in that** the selection of one of the places is followed by the display of quarters that are part of said place for the purpose of selection.

12. Navigation apparatus, particularly in a vehicle, having a display unit (2), having an operator control unit (6, 9, 10), having a computation unit (4) and having a memory unit (13, 14, 17), wherein the operator control unit (6) can be used to input a place name into the navigation apparatus, wherein the place name can be compared by the computation unit (4) with place names stored in the memory unit (13, 14, 17), **characterized in that** at least two places having the same name are stored in the memory unit (13), **in that** the memory unit (13, 14, 17) stores graphics for identifying said places, which graphics can be displayed in the display unit (2) for the purpose of selection using the operator control unit (6, 9, 10).

13. Navigation apparatus according to Claim 12, **characterized in that** the graphics are respectively associated with the places in the memory unit.

14. Navigation apparatus according to one of Claims 12-13, **characterized in that** the graphics are map presentations for the purpose of displaying the position of the places associated with the place names.

## Revendications

1. Procédé de saisie de noms de lieux dans un dispositif de traitement des noms de lieux, notamment dans un dispositif de navigation dans un véhicule, un nom de lieu étant saisi, le nom de lieu saisi étant comparé avec les noms de lieux stockés dans une mémoire, **caractérisé en ce que** dans le cas où au moins deux lieux différents sont associés au nom de lieu saisi, au moins un graphique qui caractérise les lieux est affiché en vue de sélectionner l'un des lieux.

2. Procédé selon la revendication 1, **caractérisé en ce que** pour chaque lieu de même nom, un graphique qui caractérise le lieu est représenté.

3. Procédé selon l'une des revendications précédentes, **caractérisé en ce que** les graphiques sont des représentations de curiosités, de symboles administratifs, notamment des armoiries, et/ou des représentations cartographiques.

4. Procédé selon l'une des revendications précédentes, **caractérisé en ce que** les positions des au moins deux lieux sont affichées dans au moins une représentation cartographique en vue de leur sélection.

5. Procédé selon l'une des revendications précédentes, **caractérisé en ce que** l'échelle de la représentation cartographique est choisie de telle sorte que les au moins deux lieux peuvent être affichés simultanément dans la représentation cartographique.

6. Procédé selon la revendication 5, **caractérisé en ce que** l'échelle choisie est la plus petite échelle disponible qui permet encore une représentation simultanée des au moins deux lieux dans la surface d'affichage (10).

7. Procédé selon la revendication 4, **caractérisé en ce qu'**une représentation cartographique associée à l'un des noms de lieux est affichée pour chacun des au moins deux lieux et **en ce que** la position du lieu correspondant dans la représentation cartographique qui lui est associée est affichée.

8. Procédé selon la revendication 7, **caractérisé en ce que** pour chaque représentation cartographique, le nom du lieu avec une explication associée est représenté dans la surface d'affichage (40).

9. Procédé selon l'une des revendications 4 à 8, **caractérisé en ce que** pour l'un des au moins deux lieux, une information supplémentaire est incrustée dans l'environnement de la position du lieu dans la représentation cartographique.

10. Procédé selon la revendication 9, **caractérisé en ce que** l'incrustation de l'information supplémentaire est invoquée par un utilisateur.

11. Procédé selon l'une des revendications précédentes, **caractérisé en ce qu'**après avoir sélectionné l'un des lieux, des lieux partiels faisant partie de ce lieu sont affichés en vue de leur sélection.

12. Dispositif de navigation, notamment dans un véhicule, comprenant une unité d'affichage (2), comprenant une unité de commande (6, 9, 10), comprenant une unité de calcul (4) et comprenant une unité de mémoire (13, 14, 17), un nom de lieu pouvant être saisi dans le dispositif de navigation par le biais de l'unité de commande (6), le nom de lieu pouvant être comparé par l'unité de calcul (4) avec des noms de lieux stockés dans l'unité de mémoire (13, 14, 17), **caractérisé en ce qu'**au moins deux lieux ayant le même nom sont enregistrés dans l'unité de mémoire (13), et **en ce que** des graphiques destinés à identifier ces lieux sont enregistrés dans l'unité de mémoire (13, 14, 17) et peuvent être affichés dans l'unité d'affichage (2) en vue de leur sélection par le biais de l'unité de commande (6, 9, 10).

13. Dispositif de navigation selon la revendication 12, **caractérisé en ce que** les graphiques sont respectivement associés aux lieux dans l'unité de mémoire.

14. Dispositif de navigation selon l'une des revendications 12 - 13, **caractérisé en ce que** les graphiques sont des représentations cartographiques destinées à afficher la position des lieux associés aux noms de lieux.
